# EUROPEAN PATENT SPECIFICATION

(11) **EP 1 122 109 B1**
(45) Date of publication and mention of the grant of the patent: **24.11.2004**
(21) Application number: 00119338.2
(22) Date of filing: 07.09.2000
(51) Int. Cl.: B60K 6/02, B60K 41/00, F16H 61/02

(54) **Hybrid car comprising a control device for gear shifting**
Hybridfahrzeug mit Steuerungsvorrichtung zur Gangschaltung
Véhicule hybride comportant un système pour la commande des passages de vitesse

(30) Priority: 04.02.2000 JP 2000032798
(43) Date of publication of application: 08.08.2001
(73) Proprietor: Hitachi, Ltd., Chiyoda-ku, Tokyo 101-8010 (JP)
(72) Inventor: Sakamoto, Hiroshi, Hitachi-shi, Ibaraki 316-0036 (JP); Minowa, Toshimichi, Mito-shi, Ibaraki 311-1115 (JP); Kayano, Mitsuo, Hitachi-shi, Ibaraki 316-0014 (JP)
(74) Representative: Beetz & Partner Patentanwälte

(56) References cited:
- EP-A- 0 743 215
- EP-A- 0 845 618
- WO-A-00/20243
- DE-A- 19 849 156

## Description

### BACKGROUND OF THE INVENTION

This invention relates to a hybrid car comprising control device an internal combustion engine, a dynamo-electric machine and a power transmission device, and particularly relates to a control device for a hybrid car designing the improvement of acceleration ability for the automobile.

From the viewpoint of recent global environment problems, in a hybrid car (hereunder, referred to as "HEV") by which the considerable reduction of the fuel consumption of an automobile can be expected, the establishment of a driving power management HEV control system for designing the consistence of the fuel consumption and the acceleration ability has been important. In this system, it is needed that, as acceleration and deceleration senses demanded by a driver is satisfied, to operate an internal combustion engine (hereinafter, referred to as "an engine") and a dynamo-electric machine (hereunder, referred to as "a motor") with high efficiency the engine, the motor and a power generator be integrated-controlled.

Generally, the HEV comprises the engine, the dynamo-electric machine and a power transmitting device. And, as a prior art control device for the HEV, a control device for a hybrid car is known in which the change-speed is adapted to be achieved depending upon the operating conditions of the automobile by combining, as the change-speed device, a staged gear transmission and a moving start clutch operating to cut off and connect the power transmission of the engine, as described in JP-A-1169509 (Japanese Patent Application Laid-Open No. 69509/1999), for example. This uses a moving start clutch device operating hydraulically, for example, and when the control device determines that the change-speed should be done depending upon a driver intention, for example a acceleration pedal operating amount and the speed of the automobile, the moving start clutch device is cut off, and the transmission is operated for the change-speed by a hydraulic device, etc.. And, it is constructed to connect, after the change-speed, the moving start device again.

Thus JP-A-1169509 discloses a hybrid car including:
an internal combustion engine,
at least one dynamo-electric machine,
a transmission mechanism between the output shaft of said internal combustion engine and the output shaft (20) of said dynamo-electric machine,
a clutch mechanism for change-speed switching provided in said transmission mechanism,
and a control device comprising
a driving power correcting means (150) for increasing the output of said dynamo-electric machine (19).

In the automobile using such transmission mechanism, when the change-speed is effected at change-speed timing defined by the acceleration pedal controlling amount and the automobile speed, the throttle is closed independently from the driver intention and as a result the engine torque decreases temporarily, and at the same time the moving start clutch device is cut off and as a result the driver feels the deceleration sense and the discomfort sense. In the invention disclosed in the above-mentioned Japanese Patent Prepublication, the occurrence of the deceleration sense at the time of the change-speed is avoided by arranging at a proper position a motor by which it is possible to perform the driving of a drive wheel and electric power regeneration by means of said driving wheel and by increasing the driving torque of said motor when the moving start clutch device is cut off accompanying the above-mentioned change-speed operation.

However, in the prior art control device, in order to cause the staged gear transmission to change speed by using a synchronization mating type mechanism such as a dog clutch, it was needed to cut off the moving start clutch, make the torque at the input shaft-side of the transmission zero, perform the synchronization of the input and output shafts of the transmission, and release the dog clutch. Thus, in the prior art change-speed method in which the moving start clutch is cut off, there was a problem that since it is impossible to increase the driving torque of said motor until the dog clutch is released, the torque of transmission output shaft certainly drops to near zero. As a result, the driver feels a shock and the ride quality deteriorates.

Also, there is a problem that in case where the driving torque of said motor is increased, the revolution number of the output shaft of the motor directly coupled to the driving wheel increases and the revolution number synchronization between the output shaft of the internal combustion engine the output shaft of the motor becomes imperfect, and as a result inertia torque is generated when the moving start clutch is connected, whereby the driver feels a shock and the ride quality deteriorates.

### SUMMARY OF THE INVENTION

The first object of this invention is to provide a control device for a hybrid car wherein in case where a staged gear transmission is change-speedd using a synchronization mating type mechanism such as a dog clutch, a torque drop at the time of change-speed occurring when a moving start clutch is cut off is suppressed, thereby to improve the acceleration of ability the automobile.

The second object of this invention is to provide a control device for a hybrid car wherein the generation of inertia torque in case where the occurrence of a deceleration sense at the time of change-speed by increasing the driving torque of a motor is avoided, is suppressed, thereby to improve the acceleration of ability the automobile.

In order to achieve the above-mentioned objects, this invention provides a hybrid car according to claim 1.

Preferably, the hybrid car further comprises revolution number synchronizing means for effecting revolution number synchronization between the output shaft of said internal combustion engine and the output shaft of said dynamo-electric machine on the basis of the driving power correction part found by said driving power correcting means.

Preferably, the hybrid car is so arranged that an electronically controlled throttle is used in said revolution number synchronizing means.

Preferably, the hybrid car is so arranged that a second dynamo-electric machine connected to said internal combustion engine is used in said revolution number synchronization means.

With such construction, it is actualized that in case where a staged gear transmission is change-speedd using a synchronization mating type mechanism, the improvement of acceleration ability for the automobile can be achieved by depressing torque reduction at the time of the change-speed occurring due to the cutting off of a moving start clutch and by increasing the driving torque of a motor, thereby to suppress the generation of inertia torque when the occurrence of the sense of deceleration at the time of the change-speed is eluded.

### BRIEF DESCRIPTION OF THE DRAWINGS

Fig. 1 is a system construction view showing the configuration of a hybrid car using the control device of the hybrid car according to one embodiment of this invention;
Fig. 2 is an explanatory view of processes executed in change-speed switching means used in the control device for the hybrid car according to one embodiment of this invention;
Fig. 3 is a time chart showing a controlling method at the time of change-speed switching using the control device of the hybrid car according to one embodiment of this invention;
Fig. 4 is an explanatory view of processes executed in driving power variation part estimating means used in the control device for the hybrid car according to one embodiment of this invention;
Fig. 5 is an explanatory view of processes executed in driving power correcting means used in the control device for the hybrid car according to one embodiment of this invention;
Fig. 6 is an explanatory view of processes in revolution number synchronizing means used in the control device for the hybrid car according to one embodiment of this invention;
Fig. 7 is a system construction view showing the configuration of a hybrid car using a control device for a hybrid car according to another embodiment of the invention;
Fig. 8 is an explanatory view of processes executed in change-speed switching means used in the control device for the hybrid car according to another embodiment of this invention;
Fig. 9 is an explanatory view of processes executed in driving power variation part estimating means used in the control device for the hybrid car according to another embodiment of this invention;
Fig. 10 is an explanatory view of processes executed in driving power correcting means used in the control device for the hybrid car according to another embodiment of this invention;
Fig. 11 is an explanatory view of processes in revolution number synchronizing means used in the control device for the hybrid car according to another embodiment of this invention;
Fig. 12 is a system construction view of a hybrid car according to sill another embodiment of this invention; and
Fig. 13 is a time chart showing controls executed at the time of change-speed in the embodiments of this invention.

### DETAILED DESCRIPTION OF THE PREFERRED EMBODIMENTS

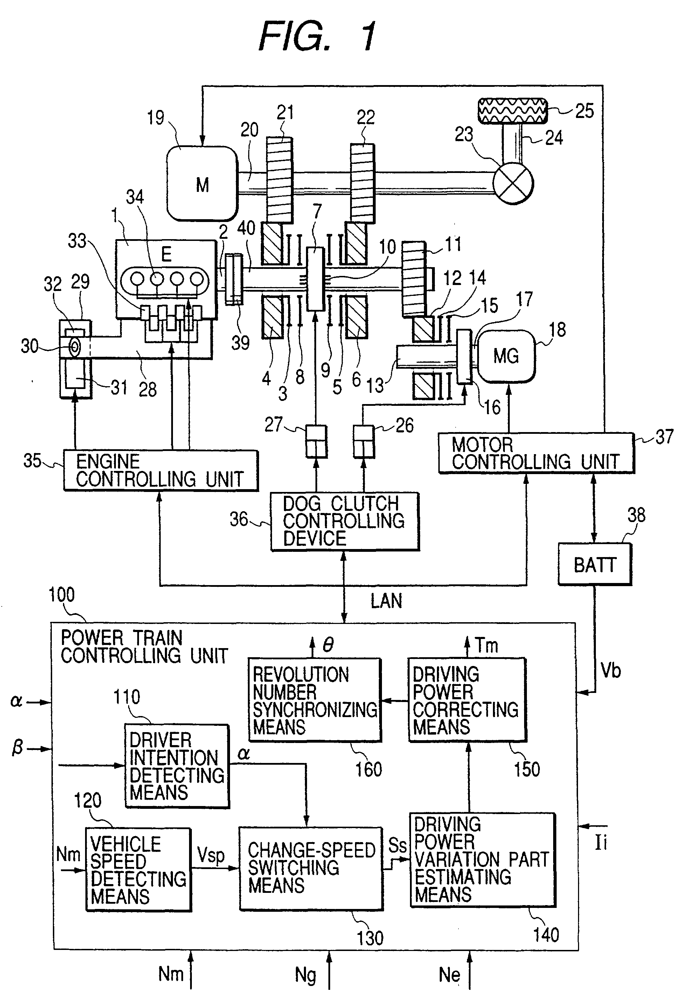

Fig. 1 is a system diagram showing the system construction of a hybrid car using a control device for a hybrid car, according to one embodiment of this invention.

A moving start clutch 39 is placed between the output shaft 2 of an engine 1 and the input shaft 40 of a transmission, and the output shaft 2 and the input shaft 40 are broken or cut off and connected by the breaking and connecting operation of the moving start clutch 39. The input shaft 40 has thereon a low speed engine-side gear 4 including a mating gear 3, a high speed engine-side gear 6 including a mating gear 5, a hub 7 directly coupling the low speed engine-side gear 4 and the high speed engine-side gear 6 to the output shaft 2, and a low speed synchronizer ling 8 and a high speed synchronizer ling 9.

A stopper (not shown) is provided so that the low speed engine-side gear 4 and the high speed engine-side gear 6 can not be moved in the axial direction of the input shaft 40. Grooves (not shown) which are adapted to engage with a plurality of the grooves 10 of the input shaft 40 are provided on the inside face of the hub 7, whereby the hub 7 is movable in the axial direction of the input shaft 40, but the movement toward the rotational direction of the input shaft 40 is limited. Therefore, in case where the moving start clutch 39 is connected, the torque output from the engine 1 is transmitted to the hub 7.

In order to transmit the torque from the engine 1 to the low speed engine-side gear 4 and the high speed engine-side gear 6, it is needed to cause the hub 7 to move in the axial direction of the input shaft 40, and to couple directly the hub 7 to the mating gear 3 or the mating gear 5 through the low speed synchronizer ring 8 or the high speed synchronizer ling 9, respectively. To transfer the hub 7, a hydraulic actuator 27 is used which is controlled by a dog clutch controlling device 36. Herein, a clutch mechanism comprising the hub 7, the mating gear 3, the mating gear 5, the low speed synchronizer ring 8 and the high speed synchronizer ring 9 is referred to as "a dog clutch". This clutch mechanism enables to transmit energy from a power source such as the engine 1 to a tier 25 with high efficiency, thereby to provide low fuel consumption.

The above-mentioned clutch mechanism and hydraulic actuator are also used to couple directly the input shaft 40 of the transmission to the output shaft 13 of a power generator 18. On the input shaft 40, a power generator engine-side gear 11 is provided which rotates with the input shaft. Also, on the output shaft 13, there are provided a power generator-side gear for the power generator, 12 having a mating gear 14, a hub 16 for directly coupling the power generator-side for the power generator, 12 and the output shaft 13, and a power generator synchronizer ring 15. The hub 16 rotates with the output shaft 13, and is movable along grooves 17 in the axial direction of the output shaft 13.

On the output shaft 20 of a motor 19 for driving an automobile (not shown), there are provided a low speed motor-side gear 21 and a high speed motor side gear 22 which engage with the low speed engine-side gear 4 and the high speed engine-side gear 6, respectively. Also, on the output shaft 20 a finally decelerating gear 23 is provided which enables the running of the automobile with only the motor 19.

In the engine 1, the amount of intake air is controlled by an electronically controlled throttle 29 attached to an intake pipe 28, whereby the amount of fuel compatible with the amount of air is injected from a fuel injecting device 33. The electronically controlled throttle 29 comprises a throttle valve 30, a driving motor 31 and a throttle sensor 32.

Also, an air fuel ratio is determined on the basis of the amount of air and the amount of fuel, and depending thereupon fuel is injected into a cylinder by the fuel injecting device 33. Ignition timing is determined on the basis of signals such as an engine revolution numbersignal,etc., and depending thereupon ignition is performed by an ignition device 34. As the fuel injection device 33, various injection systems including an intake port fuel injection system in which fuel is injected to an intake port and a cylinder fuel injection system in which fuel is injected directly into a cylinder may be utilized, but it is preferable to select a system which enables to decrease fuel consumption and is superior to exhaust gas ability, comparing operation areas (as determined by the engine torque and the engine revolution number) required by the engine.

Next, a control device 100 for controlling the engine 1, the power generator 18 and the motor 19 will be explained.

The power train controlling unit 100 receives as input signals an acceleration pedal control amount signal , a brake control signal β, a shift lever position signal Ii, a battery capacity signal Vb, a motor revolution number signal Nm, an engine revolution number signal Ne and a power generator revolution number signal Ng. The power train control unit 100 computes the torque Te of the engine 1, and sends it to an engine control unit 35 through LAN which constitutes communication means. In the engine control unit 35, the amount of throttle valve opening, the amount of fuel and ignition timing which achieve the torque Te of the engine 1 are computed, and depending thereupon respective actuators are controlled.

Also, the power train control unit 100 computes the loads of the motor 19 and the power generator 18, and sends them to a motor control unit 37 through the LAN, and depending thereupon the respective actuators are controlled. The motor control unit 37 functions to cause power obtained from the power generator 18 to be supplied to the battery 38 for its charging, and to cause power from the battery 38 to be supplied to the motor 19, etc. for their driving.

The power train control unit 100 comprises driver intension detecting means 110, automobile speed detecting means 120, change-speed switching means 130, driving power variation part estimating means for estimating the driving power variation part occurring at the time of the change-speed, driving power correcting means 150 for correcting the driving power variation part and revolution number synchronizing means 160 for achieving revolution number synchronization between the engine output shaft and the motor output shaft. Incidentally, the change-speed switch means 130 will be explained hereinafter in detail.

The driver intention detecting means 110 detects the intention of a driver on the basis of the acceleration pedal controlling amount and the brake control power β.

The automobile speed detecting means 120 computes the automobile speed Vsp on the basis of the motor revolution number Nm detected by a motor revolution number sensor (not shown), etc. (in this case, the computation is performed as Vsp = f(Nm) using a function f).

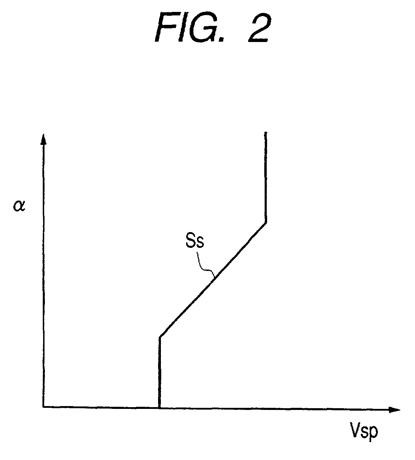

Now, processes effected in the change-speed switching means 130 will be explained using Fig.2. Fig. 2 shows the speed controlling command Ss characteristics of the transmission mechanism using the above-mentioned dog clutch for further improving in efficiency the operation areas of the engine 1 and the motor 19. The change-speed command Ss is determined on the basis of the acceleration pedal controlling amount and the automobile speed Vsp, for example. The change-speed command Ss is found as such a value that the engine 1 acts with the maximum efficiency within the overall operation area, by using a pre-experiment, a simulation or the like, these values being stored in memory means (not shown) within the power train control unit 100.

Also, the driving power variation part estimating means 140 computes target driving power Ttar on the basis of the acceleration pedal controlling amount and the automobile speed Vsp (in this case, the computation is performed as Ttar = h( , Vsp) using function h). The driving power variation part can be estimated on the basis of the target driving force Ttar computed according to the function h; the engine revolution number Ne detected by an engine revolution number sensor (not shown), etc.; the torque of the engine 1 computed on the basis of the electronically controlled throttle opening θ sent from the engine controlling unit 35; and the torque of the motor 19 sent from the motor controlling unit 37.

The driving power correcting means 150 computes the driving power correction part on the basis of the driving power variation part found in the driving power variation part estimating means 140, computes the target torque Tm of the motor 19, and sends the target torque Tm of the motor 19 to the motor controlling unit 37 through the LAN.

Also, the revolution number synchronizing means 160 computes such electronically controlled throttle opening θ that the revolution number synchronization is achieved between the input shaft 40 of the transmission and its output shaft 20, on the basis of the driving power correction part found in the driving power correcting means 150, and sends the computed electronically controlled throttle opening θ to the engine controlling unit 35.

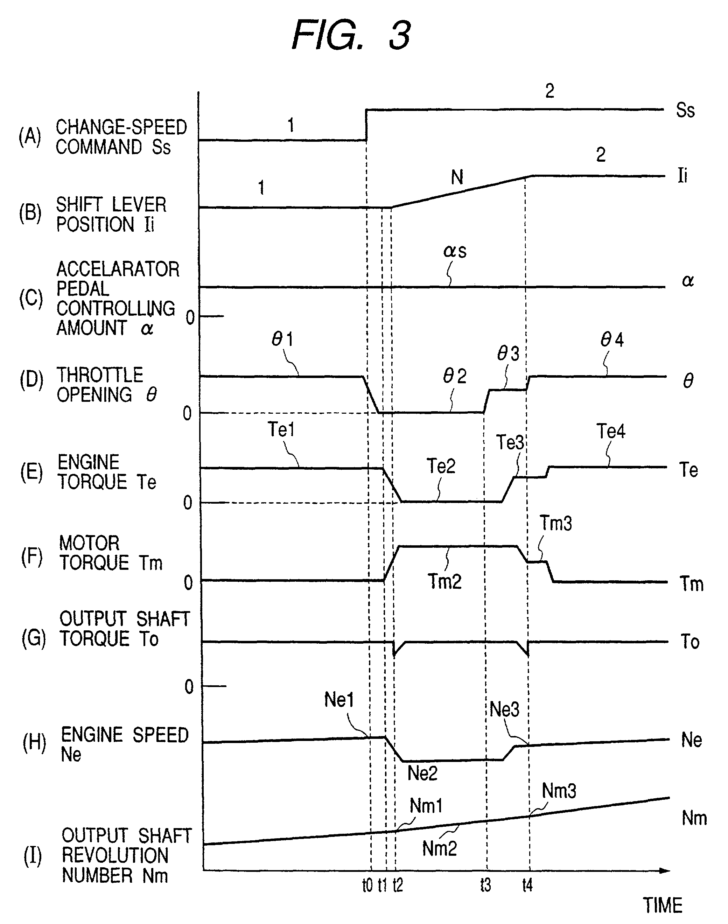

Then, the control method at the time of the change-speed using the control device of a hybrid car according to this embodiment will be explained using Fig. 3, Fig. 4, Fig. 5 and Fig. 6.

First, a control method at the time of the first to second change-speed will be explained using Fig. 3.

Fig. 3 is a time chart showing the control method at the time of the first to second change-speed using the control device for the hybrid car according to one embodiment of this invention.

In Fig. 3, Fig. 3(A) indicates a change-speed command Ss, Fig. 3(B) a shift lever position Ii, Fig. 3(C) an acceleration pedal controlling amount , Fig. 3(D) a throttle opening θ, Fig. 3(E) engine torque Te, Fig. 3(F) motor torque Tm, Fig. 3(G) output shaft torque To corresponding to the driving power of the automobile, Fig. 3(H) an engine revolution number Ne, and Fig. 3(I) an output shaft revolution number Nm.Also,the abscissa axis of the time chart indicates time.

As shown in Fig. 3(A), at the point of time to, when the change-speed command Ss is output from the change-speed switching means 130 as shown in Fig.2 in response to the acceleration pedal controlling amount *f*¿ and the automobile speed Vsp control for suppressing the driving power variation occurring at the time of the change-speed is started. For the purpose of simplification, as shown in Fig. 3(C), it is assumed that the acceleration pedal controlling amount is constant ( = s).

In the first, as shown in Fig. 3D, the electronically controlled throttle is controlled to start the closing thereof at t = t0, and to become the throttle opening θ = θ2 (= 0). This is because it is needed to synchronize the torque of the input shaft 40 of the transmission and the torque of its output shaft 20 to alter the dog clutch from the first speed coupling state to the released state under the condition that the moving start clutch 39 is connected, so it is needed to control the engine torque Te in response to the motor torque Tm for correcting the torque reduction of the output shaft at the time of the dog clutch releasing. As shown in Fig. 3(E), there is a slight response delay in the engine torque Te after the closure of the throttle opening θ, and at the point of time t1 the engine torque Te starts its reduction.

And, as shown in Fig. 3(F), at the point of time t1, the motor torque Tm starts its increase, and as shown in Fig. 3(B), at the point of time t2 at the time when the engine torque Te and the motor torque Tm are synchronized, the dog clutch becomes its release condition, and the shift lever position Ii is moved from the first speed state to a neutral state. Since during such release condition of the dog clutch, the engine torque Te is not transmitted from the input shaft 40 of the transmission to its output shaft20, torque reduction by which the occupant of the automobile would receive a shock occurs, so the treatment for correcting the above-mentioned torque reduction part by increasing the motor torque up to Tm2 as shown in Fig. 3(F) is considered. At that time, the output shaft revolution number increases by the amount corresponding to the increase of the motor torque to Tm2.

On the other hand, in order to couple the dog clutch to the second speed state, it is needed to perform synchronization between the engine revolution number Ne and output shaft revolution number Nm. However, there occurs a problem that since with the throttle closed the engine revolution number drops up to Ne2 so the revolution synchronization becomes imperfect, at the time of the coupling inertia torque is produced and the coupling to the second speed becomes impossible.

In order to solve this problem, it is needed to increase the throttle opening θ up to θ 3 at the point of time t3 as shown in Fig.3(D), thereby to synchronize the engine revolution number Ne with the output shaft revolution number Nm. Such timing t3 that this throttle opening θ is increased and the throttle opening θ3 are determined on the basis of the motor torque Tm3 at the time of the dog clutch releasing and the period during which that torque is outputting, so that the engine revolution number Ne is synchronized with the output shaft revolution number Nm. In response to this throttle opening θ3, the engine torque Te and the engine revolution number Ne increase up to Te3 and Ne3, respectively, at the point of time t4 the engine revolution number Ne3 and the output shaft revolution number Nm3 are synchronized, thereby to couple the dog clutch to the second speed, and the shift lever position Ii moves from the neutral to the second speed. Also, at the time t > t4, in order to correct the delay part of the engine torque Te, the motor torque is controlled to become Tm3, whereby the delay of the motor torque Te is removed and the change-speed control is finished. The above-mentioned control method enables to suppress the torque variation occurring at the time of the change-speed, and to provide smooth change-speed.

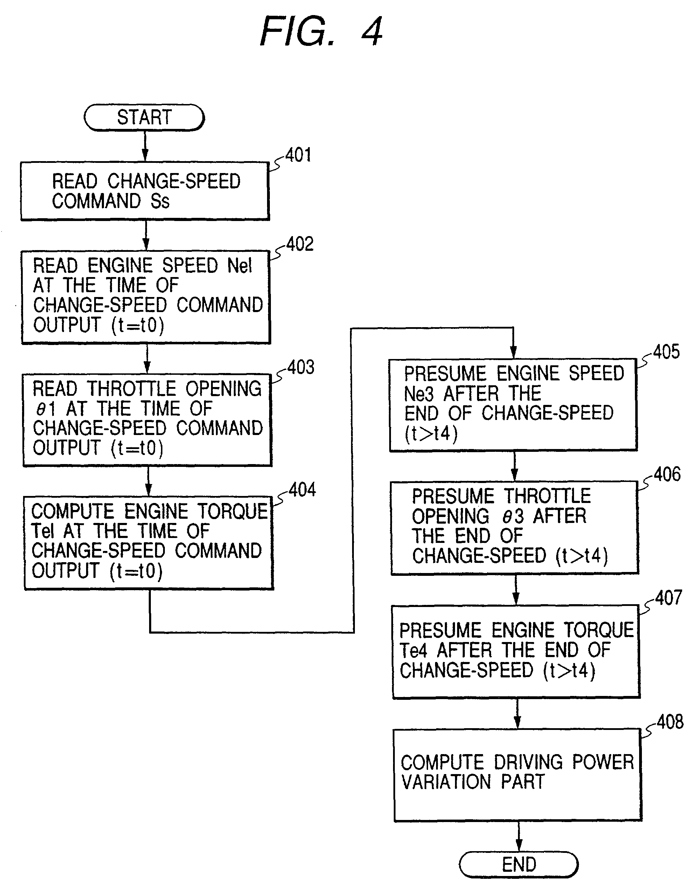

Next, a method for estimating the driving power variation part at the time of the change-speed will be explained using Fig. 4.

Fig. 4 is a flow chart showing processes performed in the driving power variation part estimating means 140 which is used in the controlling apparatus for the hybrid car according to one embodiment of this invention.

The driving power variation part estimating means 140 estimates the driving power variation part on the basis of the target driving power found from the acceleration pedal operating amount and the automobile speed Vsp.

First, in Step 401, the driving power variation part estimating means 140 reads the change-speed command Ss.

Next, in Step. 402, the driving power variation part estimating means 140 reads the engine revolution number Ne1 at the time of the change-speed command output (t = t0) detected by an engine revolution number sensor (not shown), etc.

Next, in Step 403, the driving power variation part estimating means 140 reads the throttle opening θ1 at the time of the change-speed command output (t = t0) sent from the engine controlling unit 35 through the LAN.

Next, in Step 404, the driving power variation part estimating means 140 computes the engine torque Te1 at the time of the change-speed command output (t = t0) on the basis of the engine revolution number Ne and the throttle opening θ1 read in Step 402 and Step 403, respectively.

Next, in Step 405, the driving power variation part estimating means 140 presumes the engine revolution number Ne3 after the end of the change-speed (t > t4) on the basis of the Vsp at the time of the change-speed command output (t = t0).

Next, in Step 406, the driving power variation part estimating means 140 presumes the throttle opening θ4 after the end of the change-speed (t > t4) on the basis of the throttle opening θ1 at the time of the change-speed command output (t = t0)

Next, in Step 407, the driving power variation part estimating means 140 presumes the engine torque Te4 after the end of the change-speed (t > t4) on the basis of the engine revolution number Ne3 and the throttle opening θ4 read in Step 405 and Step 406, respectively.

Finally, in Step 408, the driving power variation part is computed and estimated on the basis of the engine torque Te1 at the time of the change-speed command output (t = t0) found in Step 404; the engine torque Te4 after the end of the change-speed (t > t4)found in Step 407; the gear ratio of the transmission mechanism; and the neutral period (t1 < t < t4) of the dog clutch determined by the hydraulic actuator 27 driving the hub 7.

Incidentally, as the processes performed in the driving power variation part estimating means 140, without performing the above-mentioned computations, the driving power variation part at the time of the change-speed may be estimated by a map, etc. functioning so that the driving power variation part is obtained from the acceleration pedal controlling amount , the automobile speed Vsp and the change-speed command Ss.

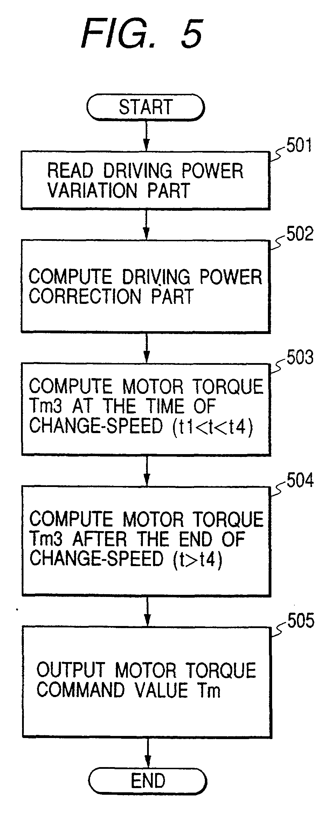

Next, processes performed in the driving power correcting means 150 used in the control device of the hybrid car according to one embodiment of this invention will be explained using Fig. 5.

Fig. 5 is a flow chart showing processes in the driving power correcting means used in the control device of the hybrid car according to one embodiment of this invention.

The driving power correcting means 150 computes a driving power correction part on the basis of the driving power variation part estimated in the driving power variation part estimating means 140, computes a motor torque commanding value Tm achieving the above-mentioned driving power correction part, and sends the computed motor torque commanding value Tm to the motor controlling unit 37.

First, in Step 501, the driving power correcting means 150 reads the driving power variation part at the time of the change-speed.

Next, in Step 502, the driving power correcting means 150 computes the driving power correction part on the basis of the driving power variation part read in Step 501.

Next, in Step 503, the driving power correcting means 150 computes the motor torque Tm2 at the time of the change-speed on the basis of the driving power correction part computed in Step 502.

Next, in Step 504, the driving power correcting means 150 estimates the delay part of the engine torque after the end of the change-speed (t > t4), and computes the motor torque Tm3 after the end of the change-speed (t > t4).

Finally, in Step 505, the driving power correcting means 150 sends as the motor torque commanding value Tm the motor torque at the time of the change-speed, Tm2 and the motor torque after the end of the change-speed (t > t4), Tm3 found in Step 503 and Step 504, respectively.

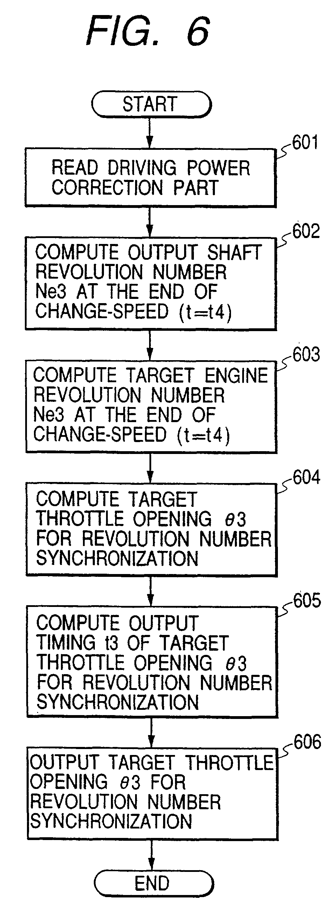

Next, processes performed in the revolution number synchronizing means 160 used in the control device of the hybrid car according to this embodiment will be explained using Fig. 6.

Fig. 6 is a flow chart showing the processes in the revolution number synchronizing means 160 used in the control device of the hybrid car according to one embodiment of this invention.

First, in Step 601, the revolution number synchronizing means 160 reads the driving power correction part.

Next, in Step 602, the revolution number synchronizing means 160 computes the output shaft revolution number (motor revolution number) Nm3 at the end of the change-speed (t = t4) on the basis of the driving power correction part read in Step 601.

Next, in Step 603, the revolution number synchronizing means 160 computes the target engine revolution number Ne3 at the end of the change-speed (t = t4) on the basis of the output shaft revolution number Nm3 found in Step 602.

Next, in Step 604, the revolution number synchronizing means 160 computes the target throttle opening 3 for the revolution number synchronization on the basis of the target engine revolution number Ne3 at the end of the change-speed (t = t4) found in Step 603.

Next, in Step 605, the revolution number synchronizing means 160 computes timing t3 for outputting the target throttle opening θ3 for the revolution number synchronization, found in Step 604.

Finally, in Step 606, the revolution number synchronizing means 160 sends to the engine controlling unit 35 the target throttle opening θ3 on the basis of the target throttle opening θ3 and its output timing t3 found in Step 604 and Step 605, respectively.

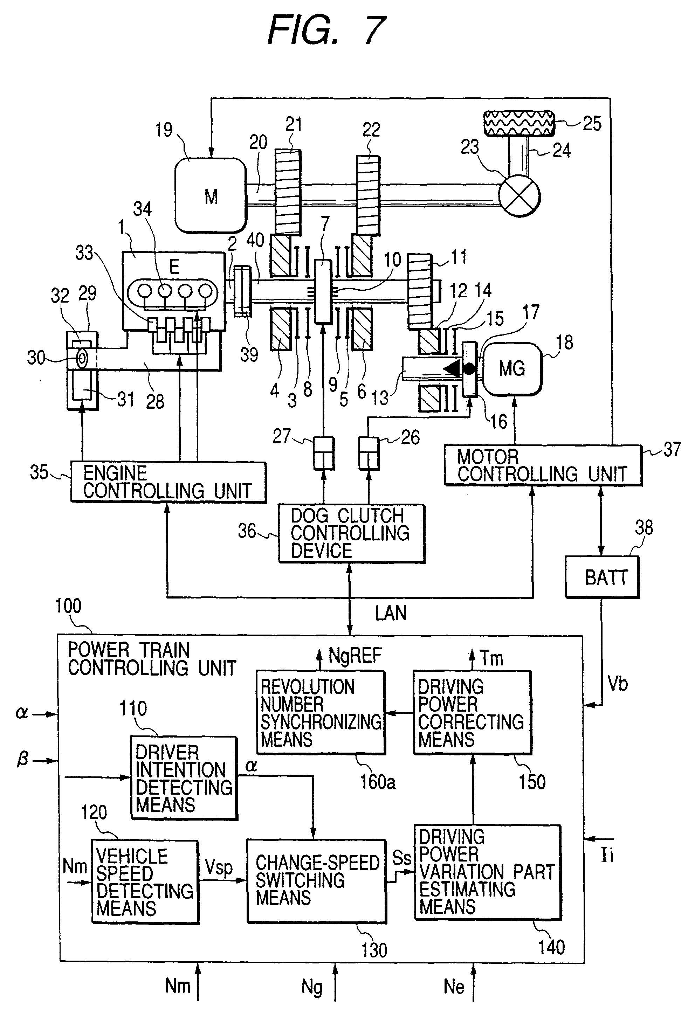

Fig. 7 is a system construction diagram of a hybrid car using a power generator connected to the input shaft of the transmission as revolution number synchronizing means, in the hybrid car using the control device of the hybrid car according to another embodiment of the present invention.

A revolution number synchronizing means 160a outputs a power generator revolution number NgREF on the basis of the driving power correction part computed in the driving power correcting means 150. At that time, in order to control the revolution number of the input shaft 40 of the transmission by the power generator 18, it is needed to move the hub 16 in the axial direction of the output shaft 13, and to couple directly the mating gear 14 and the hub 7 through the power generator synchronizer ring 15. The other construction is the same as that in Fig. 1, and therefore the explanation of the parts to which the same reference numerals are attached is abbreviated.

With the construction shown in Fig. 7, it is possible to perform the revolution number synchronization between the input shaft 40 and the output shaft 20 using the power generator 18.

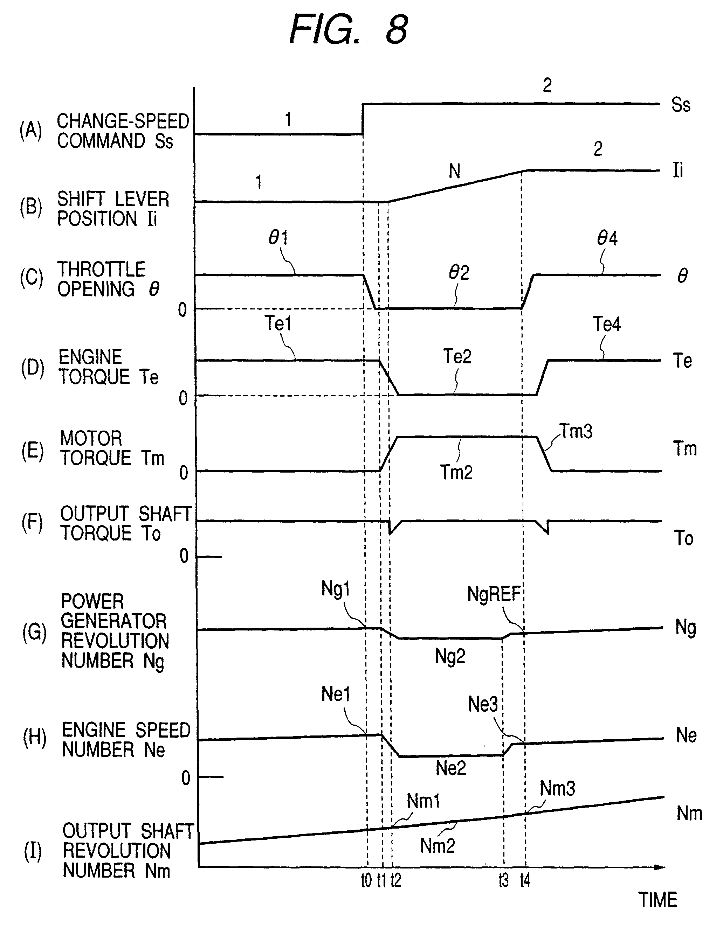

Then, the control method at the time of the change-speed using the control device of a hybrid car according to the embodiment, shown in Fig. 7,will be explained using Fig. 8, Fig. 10, Fig. 5 and Fig. 11.

First, a control method at the time of the first to second change-speed will be explained using Fig. 8.

Fig. 8 is a time chart showing the control method at the time of the first to second change-speed using the control device for the hybrid car according to one embodiment of this invention, shown in Fig. 7.

In Fig. 8, Fig. 8(A) indicates a change-speed command Ss, Fig. 8(B) a shift lever position Ii, Fig. 8(C) a throttle opening θ, Fig. 8(D) engine torque Te, Fig. 8(E) motor torque Tm, Fig. 8(F) output shaft torque To corresponding to the driving power of the automobile, Fig. 8(G) a power generator revolution number Ng, Fig. 8(H) an engine revolution number Ne, and Fig. 8(I) an output shaft revolution number Nm. Also, the abscissa axis of the chart indicates time.

As shown in Fig. 8(A), at the point of time to, when the change-speed command Ss is output from the change-speed switching means 130 as shown in Fig.2 in response to the acceleration pedal controlling amount and the automobile speed Vsp, control for suppressing the driving power variation occurring at the time of the change-speed is started. For the purpose of simplification, similarly to the case shown in Fig. 3, it is assumed that the acceleration pedal controlling amount is constant ( = s).

In the first, as shown in Fig. 8(C), the electronically controlled throttle is controlled to start the closing thereof at t = t0, and to become the throttle opening θ = θ2 (= 0). This is because it is needed to synchronize the torque of the input shaft 40 of the transmission and the torque of its output shaft 20 to alter the dog clutch from the first speed coupling state to the released state under the condition that the moving start clutch 39 is connected, so it is needed to control the engine torque Te in response to the motor torque Tm for correcting the torque reduction of the output shaft at the time of the dog clutch releasing. As shown in Fig. 8(D), there is a slight response delay in the engine torque Te after the closure of the throttle opening θ, and at the point of time t1 the engine torque Te starts its reduction.

And, as shown in Fig. 8(E), at the point of time t1, the motor torque Tm starts its increase, and as shown in Fig. 8(B), at the point of time t2 at the time when the engine torque Te and the motor torque Tm are synchronized, the dog clutch becomes its release condition, and the shift lever position Ii is moved from the first speed state to a neutral state. Since during such release condition of the dog clutch, the engine torque Te is not transmitted from the input shaft 40 of the transmission to its output shaft20, torque reduction by which the occupant of the automobile would receive a shock occurs, so the treatment for correcting the above-mentioned torque reduction part by increasing the motor torque up to Tm2 as shown in Fig. 8(E) is considered. At that time, the output shaft revolution number increases by the amount corresponding to the increase of the motor torque to Tm2.

On the other hand, in order to couple the dog clutch to the second speed state, it is needed to perform synchronization between the engine revolution number Ne and output shaft revolution number Nm. However, there occurs a problem that since the throttle is closed to release the dog clutch, the engine revolution number drops up to Ne2 so the revolution number synchronization becomes imperfect, at the time of the coupling inertia torque is produced and the coupling to the second speed becomes impossible.

In order to solve this problem, it is needed to increase the power generator revolution number up to NgREF by controlling the power generator at the point of time t3 as shown in Fig. 8(D), thereby to synchronize the engine revolution number Ne with the output shaft revolution number Nm. At that time, it is needed that the output shaft 13 of the power generator 18 and the input shaft 40 of the transmission have been coupled directly by the movement of the hub 16 in the direction as shown in Fig. 7. The target revolution number NgREF of the power generator is so determined that the engine revolution number Ne is synchronized with the output shaft revolution number Nm, on the basis of the motor torque Tm2 at the time of the dog clutch releasing and the period during which that torque is outputting. In response to this power generator revolution number NgREF, the engine revolution number Ne increases up to Ne3, at the point of time t4 the engine revolution number Ne3 and the output shaft revolution number Nm3 are synchronized, thereby to couple the dog clutch to the second speed, and the shift lever position Ii moves from the neutral to the second speed. Also, at the time t > t4, in order to correct the delay part of the engine torque Te, the motor torque is controlled to become Tm3, whereby the delay of the motor torque Te is removed and the change-speed control is finished. The above-mentioned control method enables to suppress the torque variation occurring at the time of the change-speed, and to provide smooth change-speed.

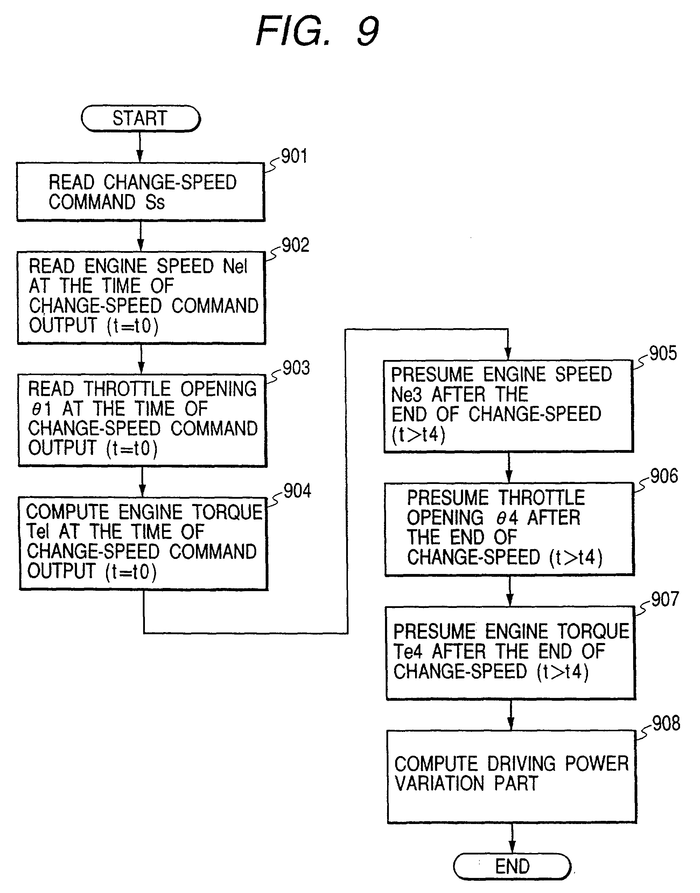

Next, a method for estimating the driving power variation part at the time of the change-speed will be explained using Fig. 9.

Fig. 9 is a flow chart showing processes performed in the driving power variation part estimating means 140 which is used in the controlling apparatus for the hybrid car according to one embodiment of this invention, as shown in Fig. 7.

The driving power variation part estimating means 140 estimates the driving power variation part on the basis of the target driving power found from the acceleration pedal operating amount and the automobile speed Vsp.

First, in Step 901, the driving power variation part estimating means 140 reads the change-speed command Ss.

Next, in Step 902, the driving power variation part estimating means 140 reads the engine revolution number Ne1 at the time of the change-speed command output (t = t0) detected by an engine revolution number sensor (not shown), etc.

Next, in Step 903, the driving power variation part estimating means 140 reads the throttle openingθ1 at the time of the change-speed command output (t = t0) sent from the engine controlling unit 35 through the LAN

Next, in Step 904, the driving power variation part estimating means 140 computes the engine torque Te1 at the time of the change-speed command output (t = t0) on the basis of the engine revolution number Ne1 and the throttle opening θ1 read in Step 902 and Step 903, respectively.

Next, in Step. 905, the driving power variation part estimating means 140 presumes the engine revolution number Ne3 after the end of the change-speed (t > t4) on the basis of the Vsp at the time of the change-speed command output (t = t0).

Next, in Step 906, the driving power variation part estimating means 140 presumes the throttle opening θ4 after the end of the change-speed (t > t4) on the basis of the throttle opening θ1 at the time of the change-speed command output (t = t0)

Next, in Step 907, the driving power variation part estimating means 140 presumes the engine torque Te4 after the end of the change-speed (t > t4) on the basis of the engine revolution number Ne and the throttle opening *θ*4 read in Step 905 and Step 906, respectively.

Finally, in Step 908, the driving power variation part is computed and estimated on the basis of the engine torque Te1 at the time of the change-speed command output (t = t0) found in Step 904; the engine torque Te4 after the end of the change-speed (t > t4) found in Step 907; the gear ratio of the transmission mechanism; and the neutral period (t1 < t < t4) of the dog clutch determined by the hydraulic actuator 27 driving the hub 7.

Incidentally, as the processes performed in the driving power variation part estimating means 140, without performing the above-mentioned computations, the driving power variation part at the time of the change-speed may be estimated by a map, etc. functioning so that the driving power variation part is obtained from the acceleration pedal controlling amount , the automobile speed Vsp and the change-speed command Ss.

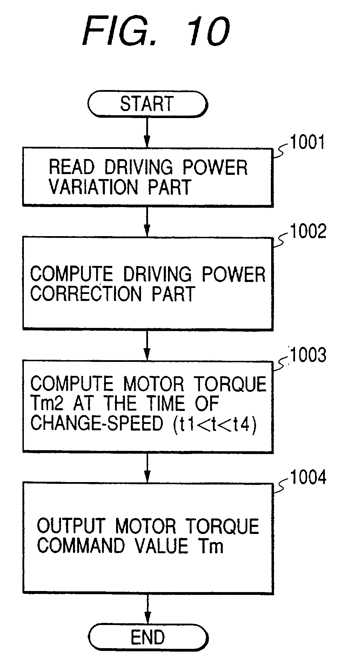

Next, processes performed in the driving power correcting means 150 used in the control device of the hybrid car according to one embodiment of this invention, as shown in Fig. 7 will be explained using Fig. 10.

Fig. 10 is a flow chart showing the processes in the driving power correcting means used in the control device of the hybrid car according to one embodiment of this invention.

The driving power correcting means 150 computes a driving power correction part on the basis of the driving power variation part estimated in the driving power variation part estimating means 140, computes a motor torque commanding value Tm achieving the above-mentioned driving power correction part, and sends the computed motor torque commanding value Tm to the motor controlling unit 37.

First, in Step 1001, the driving power correcting means 150 reads the driving power variation part at the time of the change-speed.

Next, in Step 1002, the driving power correcting means 150 computes the driving power correction part on the basis of the driving power variation part read in Step 1001.

Next, in Step 1003, the driving power correcting means 150 computes the motor torque Tm2 at the time of the change-speed on the basis of the driving power correction part computed in Step 1002.

Finally, in Step 1004, the driving power correcting means 150 sends as the motor torque commanding value Tm the motor torque Tm2 found in Step 1003.

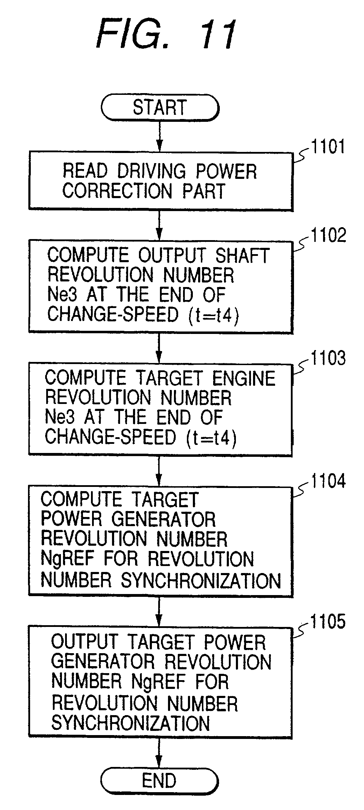

Next, processes performed in the revolution number synchronizing means 160a used in the control device of the hybrid car according to this embodiment, as shown in Fig. 7 will be explained using Fig. 11.

Fig. 11 is a flow chart showing the processes in the revolution number synchronizing means 160a used in the control device of the hybrid car according to one embodiment of this invention, as shown in Fig. 7.

First, in Step 1101, the revolution number synchronizing means 160a reads the driving power correction part.

Next, in Step 1102, the revolution number synchronizing means 160a computes the output shaft revolution number (motor revolution number) Nm3 at the end of the change-speed (t = t4) on the basis of the driving power correction part read in Step 1101.

Next, in Step 1103, the revolution number synchronizing means 160a computes the target engine revolution number Ne3 at the end of the change-speed (t = t4) on the basis of the output shaft revolution number Nm3 found in Step 1102.

Next, in Step 1104, the revolution number synchronizing means 160a computes the target power generator rotation number NgREF for the revolution number synchronization on the basis of the target engine revolution number Ne3 at the end of the change-speed (t = t4) found in Step 1103.

Finally, in Step 1105, the revolution number synchronizing means 160a sends to the engine controlling unit 35 the target power generator rotation number NgREF found in Step 1104.

Incidentally, this invention is not intended to limit to the system construction of the above-mentioned embodiments, but it may be applied to either of a gasoline engine or a diesel engine as the engine as shown. Further, the gear transmission mechanism in this invention may be constructed so that it can establish the change-speed stages of four or more forward movement speeds, and furthermore it may quip a gear transmission mechanism for establishing reverse movement stages.

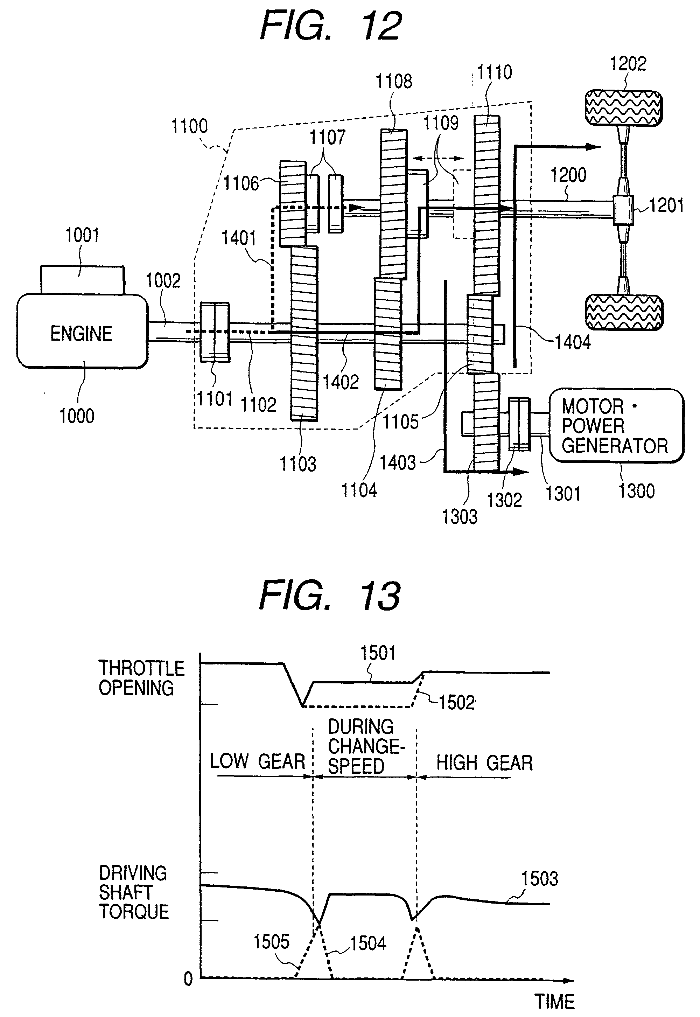

Fig. 12 is a system constructive diagram showing controlled objects in the control device for a hybrid car according to still another embodiment of this invention.

An engine 1000 includes an electronically controlled throttle 1001 which can cause air amount sucked into the engine to vary by means of a control device (not shown) separately from an acceleration pedal controlling amount, thereby to change the revolution torque of an engine output shaft 1002. Incidentally, the torque of the engine output shaft 1002 can be changed, aside from the control of the electronically controlled throttle 1002, also by a fuel supply amount, an ignition timing control, etc.

A transmission 1100 transmits the revolution torque of the engine output shaft 1002 to a transmission input shaft 1102 through a moving start clutch 1101. The transmission input shaft 1102 has an input shaft-side third speed gear 1103, an input shaft-side second speed gear 1104 and an input shaft-side first speed gear 1105, attached thereto.

These input shaft-side gears always engage with an output shaft-side third speed gear 1106, an output shaft-side second speed gear 1108 and an output shaft-side first speed gear 1110, respectively, and the revolution of the engine output shaft 1002 is transmitted at the change-speed ratios depending upon the diameter ratios of the respective engaged gears.

The revolution of the output shaft-side third speed gear 1106 is transmitted to a peed changer output shaft (driving shaft) 1200 through a wet type clutch 1107. This wet type clutch 1107 is preferably of a multiple plate clutch, for example, but may be the other wet type clutch or dry type clutch.

The revolution of the output shaft-side second speed gear 1108 and the revolution of the output shaft-side first speed gear 1110 are selectively transmitted to the transmission output shaft 1200 through a dog clutch 1109. That is to say, the output shaft-side second speed gear 1108 and the output shaft-side first speed gear are formed in midair at their center positions so that they are not fixed to the transmission output shaft 1200. Fixed to the transmission output shaft 1200 is the dog clutch 1109, so the dog clutch 1109 moves right and left in the directions shown by the allow line in Fig. 12, following to the rotation of the transmission output shaft 1200. To enable this movement, it is preferable to use an electronic solenoid (not shown), etc.

When the dog clutch 1109 moves on the right in Fig. 12, one side gear surface of the dog clutch 1109 contacts to and engages with the mating gear surface provided on the side of the output shaft-side first speed gear 1110, as shown by the dotted line aspect in the drawing, whereby the rotation of the engine output shaft 1002 is change-speedd pursuant to the diameter ratio between the input shaft-side first speed gear 1105 and the output shaft-side first gear 1110 and transmitted to the driving shaft 1200.

When the dog clutch 1109 moves on the left in Fig. 12, the other side gear surface of the dog clutch 1109 contacts to and engages with the mating gear surface provided on the side of the output shaft-side second speed gear 1109, as shown by the solid line aspect in the drawing, whereby the rotation of the engine output shaft 1002 is change-speedd pursuant to the diameter ratio between the input shaft-side second speed gear 1104 and the output shaft-side first speed gear 1108 and transmitted to the driving shaft 1200. The transmission path of the revolution torque in this case is indicated by allow line 1402 in Fig. 12.

When the dog clutch 1109 is in the middle position in which it does not engage with either the output shaft-side second speed gear 1108 or the output shaft-side first speed gear 1110, the transmission of the revolution torque through the output shaft-side second speed gear 1108 and the output shaft-side first speed gear 1110 does not be performed, and neutral state occurs. That is to say, in the neutral state, the dog clutch 1109 is in the middle position between the dotted line aspect and the solid line aspect shown in Fig. 12.

When the dog clutch 1109 is in the neutral state, if the wet type clutch 1107 is in the closed condition, the revolution torque of the engine output shaft 1002 is transmitted to the driving shaft 1200 at the change-speed ratio pursuant to the diameter ratio of the input shaft-side third speed gear 1101 and the output shaft-side third speed gear 1106. The transmission path of the revolution torque in this case is indicated by a dotted arrow line 1401 in Fig. 12.

When the dog clutch 1109 is in the neutral state, if the wet type clutch 1107 is in the opened condition, the revolution of the driving shaft 1200 and the revolution of the engine output shaft are separated.

The revolution torque transmitted to the driving shaft (transmission output shaft) 1200 drives a driving wheel through a differential gear 1201.

The input shaft-side first speed gear 1105 is connected to a motor generator 1300 through a motor-side gear 1303 and a motor connecting clutch 1302. The revolution of the motor shaft 1301 of the motor generator 1300 and the transmission input shaft 1102 can be coupled and uncoupled by the closing and opening of the motor connecting clutch 1302.

In case where the moving start clutch 1101 is opened, the motor connecting clutch 1302 is closed and the dog clutch 1109 is coupled to the output shaft-side first speed clutch 1110, it is possible to effect the moving start of the automobile by the driving power of the motor generator transmitted through the path shown by arrow line 1404, whereby it is possible to effect the operation with higher efficiency than in the case of the moving start using the engine 2000 giving poor fuel consumption at the time of the moving start of the automobile. Also, at the time of slope downward movement operation, braking operation or the like, it is possible to bring regeneration as shown in the arrow line 1403.

Next, a case where in such driving system the change-speed is performed from the first speed condition in which the driving is effected by the engine 1000 rather than the motor generator 1300, the moving start clutch 1101 is closed, the wet type clutch 1107 is opened and the dog clutch 1109 is coupled to the output shaft-side first speed gear 1110, to the second speed condition in which the dog clutch 1109 is coupled to the output shaft-side second speed gear 1108, will be explained with reference to Fig. 13.

In this case, the motor connecting clutch 1301 can take either of the opened or closed condition depending upon the operation modes. If a battery (not shown) is fully charged, it is opened, if regeneration is created by the revolution of the engine output shaft 1002, it is closed, and in case where the revolution torque is being adjusted, it is also closed. Fig. 13 shows an example of the case in which the battery is in the fully charged condition, the adjustment of the revolution torque of the transmission input shaft 1102 is not performed and the motor connecting clutch is opened.

Dotted line 1504 in Fig. 13 represents the revolution torque of the engine output shaft 1002 transmitted to the driving shaft through the output shaft-side first speed gear 1110 or the output shaft-side second speed gear1108 and the dog clutch 1109. Dotted line 1505 in Fig. 13 represents the torque transmitted to the driving shaft through the motor-side gear 1303, the transmission input shaft 1102, the input shaft-side third speed gear 1103, the output shaft-side third speed gear 1106 and the closed wet type clutch 1107, when the motor generator 1300 is in the power running condition and the motor connecting clutch 1302 and the wet type clutch 1107 are closed.

If a change-speed signal for effecting the change-speed to the second speed at the time of the first speed condition is received, the dog clutch 1109 is separated from the engagement with the output shaft-side first speed gear 1110, whereby the torque transmitted to the driving shaft 1200 is decreased as shown in dotted line 1504. At the same time, by closing the motor connecting clutch 1302 and the wet type clutch 1107, the torque generated by the motor generator 1300 is transmitted to the driving shaft 1200 as it increases as shown by dotted line 1505. Therefore, the revolution torque of the driving shaft 1200 varies as shown by solid line 1503 in such a manner that its variation is changed from dotted line 1504 to a dotted line 1505.

Thus, the fluctuation and decrease of the driving shaft torque which occur at the time when the dog clutch 1109 changes from the first speed condition to the neutral condition are suppressed.

Also, when the shift from the neutral state to the second speed state is performed, such control that the dog clutch 1109 engages with the output shaft-side second speed gear and on the other hand the wet type clutch 1107 and the motor connecting clutch 1302 are gradually opened is carried out. This causes the revolution torque of the driving shaft 1200 to vary as shown by solid line 1503 in such a manner that its variation is changed from dotted line 1505 to dotted line 1504.

Thus, the fluctuation of the driving shaft torque which occurs at the time when the dog clutch 1109 changes from the first speed to the neutral state is suppressed.

With such construction, the torque of the driving shaft 1200 changes substantially smoothly at the time of the change-speed, as shown by solid line 1503, whereby a torque shock which a driver would receive can be reduced.

Incidentally, although in the above-mentioned description an example of the torque compensation performed by the motor generator 1300 during the change-speed was mentioned, when it is not possible to effect the power running of the motor generator 1300, in case where the driving power of the engine 1000 is positively used, or the like, it is possible to perform the torque shock reduction like solid line 1503 in Fig. 13 with only the control of the engine 1000 and the wet type clutch 1107.

In that case, by changing the throttle opening as shown by solid line 1501 in Fig. 13 using an electronically controlled throttle, and performing a control for closing the wet type clutch 1107 when the dog clutch 1109 is in the neutral state, it is possible to perform the control of the torque, like dotted line 1505 in Fig. 13, transmitted on the path along the engine driving shaft 1002, the moving start clutch 1101, the transmission input shaft 1102, the input shaft-side third speed gear 1103, the output shaft-side third speed gear 1106 and the wet type clutch 1107, that is the path indicated by arrow line 1401 in Fig. 12, whereby it can be used in place of the driving power of the motor generator 1300.

Incidentally, although the connection place of the motor generator 1300 to the transmission 1100 was explained to be the input shaft-side first speed gear 1105, the same effect is obtainable even though it is the input shaft-side second speed gear 1104, the input shaft-side second speed gear 1103, the output shaft-side gears 1106, 1108 or 1110, as the case may be. Also, the same effect is obtainable even though it is connected to the transmission input shaft 1102. Also, it is not needed that the gears are arranged in the order shown in Fig. 12, and the same effect is obtainable even though the first speed and the second speed are reversed, or the number of the change-speeds is 4 or 5. Also, this invention is not limited to the construction in which the wet type clutch is provided on the third speed gear.

In accordance with this invention, in a hybrid car equipped with an engine and a motor, in case where a staged gear transmission is change-speed using a synchronization mating type mechanism, the improvement of acceleration ability for the automobile can be achieved by compensating torque reduction at the time of the change-speed occurring at the time of the cutting off of the moving start clutch and by increasing the driving torque of the motor, thereby to suppress the generation of inertia torque when the occurrence of the sense of deceleration at the time of the change-speed is elude.

## Claims

1. A hybrid car including:
an internal combustion engine (1),
at least one dynamo-electric machine (19),
a transmission mechanism between the output shaft (2)
of said internal combustion engine (1) and the output shaft (20) of said dynamo-electric machine (19), and
a clutch mechanism for change-speed switching provided in said transmission mechanism, and a control device
wherein said change-speed switching is effected without intercepting power transmission from the output shaft (2) of said internal combustion engine (1) to said transmission mechanism, further comprising;
a driving power variation part estimating means (140) for estimating a driving power variation part at the time of said change-speed switching, and
a driving power correcting means (150) for increasing the output of said dynamo-electric machine (19) so as thereby to correct said driving power variation part, on the basis of the driving power variation part found by said driving power variation part estimating means (140).

2. The hybrid car of claim 1, further comprising;
a revolution number synchronizing means (160) for effecting revolution number synchronization between the output shaft (2) of said internal combustion engine (1) and the output shaft (20) of said dynamo-electric machine (19) on the basis of the driving power correction part found by said driving power correcting means (150).

3. The hybrid car of claim 2, wherein an electronically controlled throttle is used in said revolution number synchronizing means (160).

4. The hybrid car of claim 2, wherein a second dynamo-electric machine connected to said internal combustion engine (1) is used in said revolution number synchronizing means (160).

## Patentansprüche

1. Hybridfahrzeug mit
einer Brennkraftmaschine (1),
zumindest einer dynamo-elektrischen Maschine (19),
einem Übertragungsmechanismus zwischen der Ausgangswelle (2), der Brennkraftmaschine ( 1 ) und der Ausgangswelle (20) der dynamo-elektrischen Maschine (19) und
einem Kupplungsmechanismus zur Übersetzungsverhältnisänderung durch den Übersetzungsmechanismus und
einer Steuervorrichtung,
wobei die Übersetzungsverhältnisänderung ohne eine Unterbrechung der Leistungsübertragung von der Ausgangswelle (2) der Brennkraftmaschine (1) zu dem Übertragungsmechanismus erfolgt, ferner mit
Schätzmittel (140) für einen Antriebsleistungsänderungsanteil zum Schätzen eines Antriebsleistungsänderungsanteils zur Zeit der Übersetzungsverhältnisänderung und
Antriebsleistungskorrekturmittel (150) zum Erhöhen des Ausgangs der dynamo-elektrischen Maschine (19) derart, dass dadurch der Antriebsleistungsänderungsanteil korrigiert wird, basierend auf dem Antriebsleistungsänderungsanteil gefunden durch das Schätzmittel (140) für den Antriebsleistungsänderungsanteil.

2. Hybridfahrzeug nach Anspruch 1, ferner mit Drehzahlsynchronisationsmitteln (160) zum Durchführen einer Drehzahlsynchronisation zwischen der Ausgangswelle (2) der Brennkraftmaschine ( 1 ) und der Ausgangswelle (20) der dynamo-elektrischen Maschine (19) basierend auf dem Antriebsleistungsänderungsanteil gefunden durch die Antriebsleistungskorrekturmittel (150).

3. Hybridfahrzeug nach Anspruch 2, wobei eine elektronisch gesteuerte Drossel in den Drehzahlsynchronisationsmitteln (60) verwendet wird.

4. Hybridfahrzeug nach Anspruch 2, wobei eine zweite dynamo-elektrische Maschine mit der Brennkraftmaschine (1) verbunden ist und in den Drehzahlsynchronisationsmitteln (160) verwendet wird.

## Revendications

1. Un véhicule hybride comprenant :
un moteur à combustion interne (1),
au moins une machine dynamo-électrique (19),
un mécanisme de transmission entre l'arbre de sortie (2) dudit moteur à combustion interne (1) et l'arbre de sortie (20) de ladite machine dynamo-électrique (19),
un mécanisme d'embrayage pour la commande des passages de vitesse fourni dans ledit mécanisme de transmission, et un dispositif de commande
dans lequel ladite commande des passages de vitesse s'effectue sans interrompre la transmission de puissance de l'arbre de sortie (2) dudit moteur à combustion interne (1) vers ledit mécanisme de transmission, comprenant en outre ;
un procédé d'évaluation de la variation de l'énergie motrice (140) permettant d'évaluer une variation de l'énergie motrice au moment de ladite commande des passages de vitesse, et
un procédé de correction de l'énergie motrice (150) permettant d'augmenter la puissance de ladite machine dynamo-électrique (19) afin de corriger ladite variation de l'énergie motrice, sur la base de la variation de l'énergie motrice détectée par ledit procédé d'évaluation de la variation de l'énergie motrice (140).

2. Le véhicule hybride de la revendication 1, comprenant en outre ; un procédé de synchronisation du nombre de tours (160) permettant de synchroniser le nombre de tours entre l'arbre de sortie (2) dudit moteur à combustion interne (1) et l'arbre de sortie (20) de ladite machine dynamo-électrique (19) sur la base de la correction de l'énergie motrice détectée par ledit procédé de correction de l'énergie motrice (150).

3. Le véhicule hybride de la revendication 2, dans lequel un obturateur à commande électronique est utilisé dans ledit procédé de synchronisation du nombre de tours (160).

4. Le véhicule hybride de la revendication 2, dans lequel une seconde machine dynamo-électrique reliée audit moteur à combustion interne (1) est utilisée dans ledit procédé de synchronisation du nombre de tours (160).
